**Europäisches Patentamt**

**European Patent Office**

**Office européen des brevets**

(19)

(11) Veröffentlichungsnummer : **0 477 167 A2**

(12) # EUROPÄISCHE PATENTANMELDUNG

(21) Anmeldenummer : **91890214.9**

(22) Anmeldetag : **17.09.91**

(51) Int. Cl.⁵ : **G01V 3/08**

(30) Priorität : **17.09.90 AT 1883/90**

(43) Veröffentlichungstag der Anmeldung :
**25.03.92 Patentblatt 92/13**

(84) Benannte Vertragsstaaten :
**BE CH DE FR GB IT LI NL SE**

(71) Anmelder : **PROTERRA GESELLSCHAFT FÜR
UMWELTTECHNIK GESELLSCHAFT m.b.H.
Gerasdorfer Strasse 151
A-1210 Wien (AT)**

(72) Erfinder : **Geutebrück, Ernst, Dr.
Eyblweg 15
A-1210 Wien (AT)**

(74) Vertreter : **Hamburger, Walter A., Dipl.-Ing.
Patentanwaltskanzlei HAMBURGER Postfach
96 Mahlerstrasse 9
A-1015 Wien (AT)**

(54) **Verfahren und Anlage zur Überwachung eines Gebietes.**

(57)   Verfahren und Anlage zur Überwachung eines Gebietes, bei welchem mittels Sonden an mehreren Meßstellen des Gebietes das Potential gemessen und in elektrische Signale umgesetzt wird, die Signale in vorbestimmten Zeitabständen von einer zentralen Recheneinheit abgefragt, in dieser verarbeitet und sodann angezeigt und/oder registriert werden, werden die Meßstellen in vorbestimmten Abständen entlang wenigstens einer an das Gebiet angrenzenden, vorzugsweise geschlossenen Linie und wenigstens einige der Meßstellen unterhalb des Gebietes angeordnet und die Potentialdifferenzen zwischen jeweils zwei benachbarten Meßstellen gemessen. Die Sonden besitzen jeweils eine Abfragestufe und eine von einem Mikroprozessor gesteuerte Datenspeichereinrichtung.

EP 0 477 167 A2

FIG. 1

Die Erfindung betrifft ein Verfahren zur Überwachung eines Gebietes, bei welchem an mehreren Meßstellen des Gebietes das Potential gemessen und in digitale elektrische Signale umgesetzt wird und die Signale in vorbestimmten Zeitabständen, vorzugsweise periodisch von einer zentralen Recheneinheit abgefragt, in dieser verarbeitet und sodann angezeigt und/oder registriert werden, wobei die Meßstellen in vorbestimmten Abständen entlang wenigstens einer an das Gebiet angrenzenden, vorzugsweise geschlossenen Linie angeordnet werden.

Weiters betrifft die Erfindung eine Anlage zur Durchführung des Verfahrens, mit elektrischen Sonden, die jeweils einen Meßwertgeber aufweisen und über einen Analog-Digital-Wandler sowie einen Übertragungskanal an eine Auswertestelle angeschlossen sind, wobei die Sonden in vorbestimmten Abständen entlang wenigstens einer an das Gebiet angrenzenden, vorzugsweise geschlossenen Linie angeordnet sind, jede Sonde mit einer in ihrer Nähe angeordneten, an den Meßwertgeber angeschlossenen Abfragestufe verbunden ist, und wobei die Auswertestelle eine zentrale Recheneinheit sowie eine mit den Abfragestufen über den Übertragungskanal verbundene zentrale Abfragestelle aufweist.

Solch ein Verfahren und solch eine Einrichtung zur Bestimmung von mit Kohlenwasserstoffen gefüllten unterirdischen Lagerstätten sind aus der DE-A1-35 29 466 bekannt.

In der heutigen Zeit gewinnt ein Problem immer mehr an Bedeutung, das darin liegt, Kontaminationen des Erdbodens zu verhindern oder festzustellen und Gegenmaßnahmen zu ergreifen. Dieses Problem tritt in erster Linie bei Deponien, Altlasten, Tanklagern, Kanälen usw. auf; anderseits besteht auch das Bedürfnis, die Wanderung nicht kontaminierender Flüssigkeiten im Erdboden festzustellen, z.B. die Dichtheit von Staudämmen zu kontrollieren.

Der Erfindung liegt die Aufgabe zugrunde, dieses Problem zu lösen bzw. dieses Bedürfnis zu befriedigen und ein Verfahren sowie eine Anlage zur Überwachung des Erdbodens an derartigen Stellen und Gebieten zu schaffen.

Diese Aufgabe wird einerseits mit einem Verfahren der eingangs angegebenen Art dadurch gelöst, daß erfindungsgemäß wenigstens einige der Meßstellen unterhalb des Gebietes angeordnet werden, und daß die Potentialdifferenzen zwischen jeweils zwei benachbarten Meßstellen gemessen werden.

Anderseits wird die gestellte Aufgabe mit einer Anlage der eingangs erwähnten Art dadurch gelöst, daß erfindungsgemäß wenigstens einige der Sonden unterhalb des Gebietes angeordnet sind und daß jede vorzugsweise über ein Filter an die Abfragestufe angeschlossene Sonde eine Datenspeichereinrichtung aufweist, wobei der Analog-Digital-Wandler und die Datenspeichereinrichtung von einem Mikroprozessor gesteuert sind.

Auf diese Weise schafft die Erfindung ein Verfahren und eine Anlage, mit dem bzw. der vorbestimmte Gebiete, z.B. eine Deponie, ein Kanalnetz, ein Staudamm od.dgl., ständig überwacht werden kann, um allfällig austretende Flüssigkeiten feststellen und Gegenmaßnahmen ergreifen zu können. Somit können in kürzester Zeit Angaben über die Dichtheit einer Deponie oder eines Kanalnetzes gemacht und die nötigen Maßnahmen ergriffen werden. Durch die Abfrage von der zentralen Recheneinheit wird die eindeutige Zuordnung der Meßwerte zu den Meßstellen gewährleistet. Die Erfindung kann sowohl bei bereits bestehenden Deponien, Kanalnetzen, Staudämmen usw. nachträglich angewendet als auch in zu errichtende Deponien, Kanalnetze, Staudämme usw. eingebaut werden.

Zur Suche von Erz- und Erdöllagerstätten sind zwar geophysikalische Aufschlußverfahren, sogenannte geoelektrische Verfahren bekannt, mit denen aus der gemessenen Verteilung von im Erdboden fließenden elektrischen Strömen Aussagen über den Aufbau des Untergrundes gewonnen werden. Diese geoelektrischen Verfahren lassen sich in elektromagnetische und in Potentialverfahren einteilen, und diese wiederum in Verfahren mit künstlicher und mit natürlicher Stromzufuhr.

Bei all diesen Verfahren werden in der Regel Messungen zwischen einer ortsfesten Basissonde und einer sogenannten Wandersonde durchgeführt. Weiters ist auch bekannt, einige Sonden entlang einer im wesentlichen geraden Linie anzuordnen und jeweils über ein Kabel an die Basissonde anzuschließen. Die von den Sonden erfaßten Meßwerte werden in analoger Form einer Auswertestelle zugeleitet, dort verarbeitet und ausgewertet.

Nachteilig hiebei ist, daß nur sehr wenige Meßwerte erfaßt werden, daß die Meßwertübertragung in analoger Form störanfällig Rauschen, Nebensprechen od.dgl. ist und zu verfälschten Ergebnissen führen kann. Da im Fall mehrerer Sonde jede über ein eigenes Kabel mit der Auswertestelle verbunden ist, ist der Aufwand an Kabeln beträchtlich.

Die Durchführung von Messungen an relativ wenigen Meßstellen bzw. Sondenplätzen fällt beim Aufschluß von Erz- oder Erdöllagerstätten nicht besonders ins Gewicht, da die Lagerstätten eine verhältnismäßig große Ausdehnung und im wesentlichen homogene Zusammensetzung besitzen.

Die Erfindung macht sich die auf dem Bergbaugebiet bekannten Verfahren und Einrichtungen zunutze, die aber in ihrer bestehenden Form zur Feststellung leckender Deponien oder Kanäle weder geeignet noch anwendbar sind, weil oftmals z.B. aus einem Faß ausgelaufener flüssiger Giftstoff nur ein eng begrenztes Gebiet des Untergrundes kontaminiert.

In vorteilhafter Weiterbildung des Verfahrens können wenigstens einige der Meßstellen unterhalb des Grundwasserspiegels angeordnet werden.

Vorteilhafterweise werden die elektrischen Signale an den Meßstellen gespeichert.

Wenn bei dem Verfahren wenigstens eine Bezugsmeßstelle verwendet wird, ist günstig, wenn jede Bezugsmeßstelle bezüglich des Gebietes jenseits der Linie angeordnet wird.

Dabei können die Bezugsmeßstellen im Zuflußbereich und gegebenenfalls im Abflußbereich des Grundwassers angeordnet werden.

Zu Verringerung von Fehlern oder Störeinflüssen können die Meßstellen und die Bezugsmeßstellen örtlich vertauscht werden, jeweils die beiden einander zugeordneten gemessenen Potentiale voneinander subtrahiert und diese Differenzen weiterverarbeitet werden.

Zur Vergrößerung der Sicherheit der Überwachung ist vorzuziehen, daß die Meßwerte gespeichert und zu den vorbestimmten Zeitabständen mit vorangegangenen Meßwerten verglichen werden.

Ferner kann bei Überschreiten der Meß- und oder vergleichsergebnisse über einen vorbestimmten Grenzwert ein Alarmsignal ausgelöst werden.

Dabei kann das Alarmsignal als Steuersignal für eine automatische Steuerung, z.B. diejenige einer Pumpe, verwendet werden.

Günstig ist weiteres, wenn die Abfrage der elektrischen Signale an die zentrale Recheneinheit drahtlos erfolgt.

Zwecks einer übersichtlichen Überwachung kann vorgesehen sein, den elektrischen Signalen abgestufte Größenbereiche zuzuordnen und diese Größenbereiche gemeinsam mit den übrigen Signalen anzuzeigen und/oder zu registrieren.

In vorteilhafter Weiterbildung der Anlage können wenigstens einige der Sonden unterhalb des Grundwasserspiegels angeordnet sein.

Zweckmäßigerweise kann der Übertragungskanal als Funkstrecke ausgebildet sein.

Bei einer Anlage mit wenigstens einer Bezugssonde ist von Vorteil, wenn die Bezugssonde bezüglich des Gebietes jenseits der Linie angeordnet ist.

Dabei kann jede Bezugssonde im Zuflußbereich oder Abflußbereich des Grundwassers angeordnet sein.

Von Vorteil ist weiteres, wenn die Sonden mit einer eingebauten elektrischen Energiequelle ausgestattet sind.

Günstig ist auch, wenn an die zentrale Recheneinheit ein Steuergerät, z.B. für eine Pumpe angeschlossen ist.

Nachfolgend wird die Erfindung anhand eines bevorzugten Ausführungsbeispieles der Anlage näher erläutert, das in den Zeichnungen schematisch dargestellt ist; es zeigen Fig. 1 einen Schnitt durch eine Deponie mit einer erfindungsgemäßen Anlage, Fig. 2 ein Blockschema der Anlage und Fig. 3 ein Blockschaltbild einer Sonde.

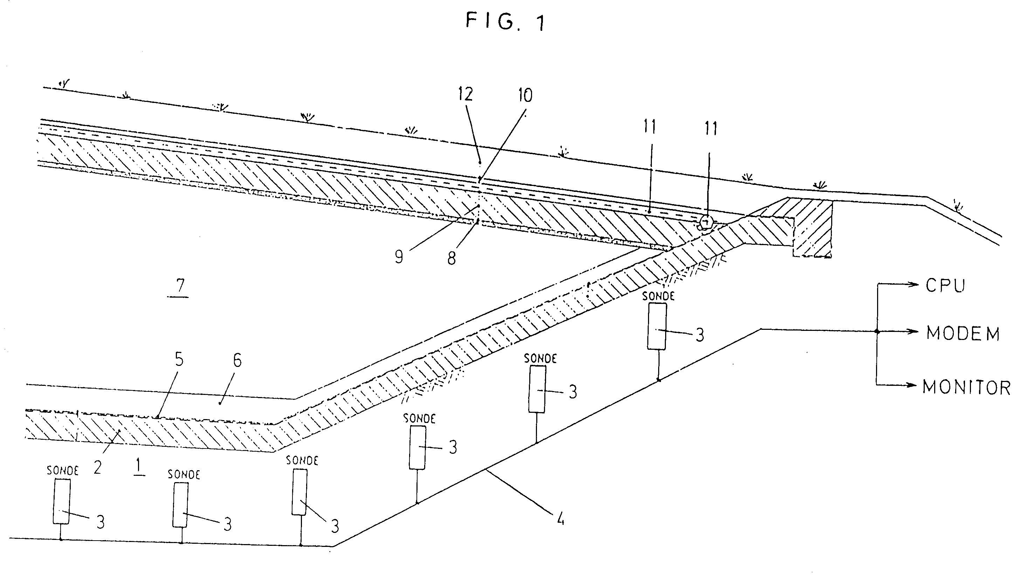

In Fig. 1 ist ein Querschnitt durch eine Deponie gezeigt, bei der unter einer auf den Erdboden 1 aufgebrachten, z.B. dreilagigen Dichtschicht 2 entlang einer geraden Linie und an die Deponie angrenzend in vorbestimmen, gleichen Abständen Sonden 3 vorgesehen sind, die über einen Übertragungskanal 4 in Form einer Datensammelleitung an eine zentrale Recheneinheit CPU, ein Modem und einen Monitor angeschlossen sind.

Das auf der mit einer Kunststoffbahn 5, einer Vliesschicht 6 und Drainageschotter 6 abgedeckten Dichtschicht 2 gelagerte Deponiegut 7 ist in üblicher Weise mit einer Ausgleichsschicht 8 abgedeckt, auf der eine Dichtschicht 9 aufgebracht ist, auf der Drainageschotter 10 mit eingebetteten Drainagerrohren 11 liegt, der schließlich mit einer Humusschicht 12 od.dgl. bedeckt ist.

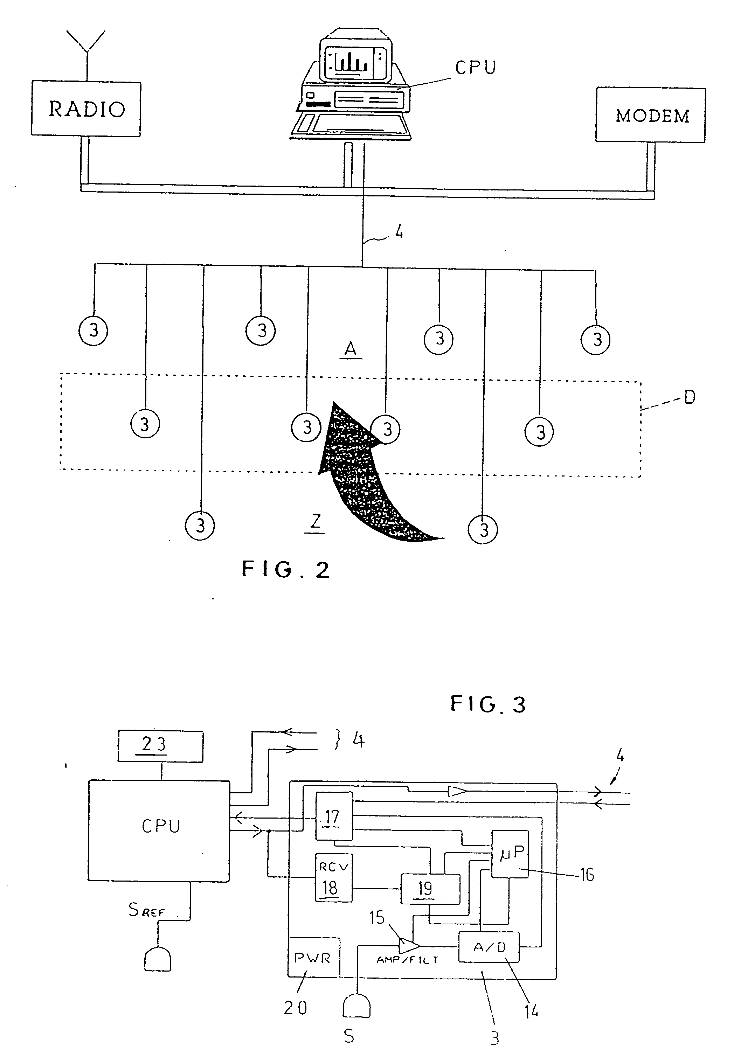

Da die Kunststoffbahn 5 im Laufe der Zeit, meist durch Einfluß agressiver Stoffe im Deponiegut 7, undicht werden kann, ist eine Überwachung des unter der Deponie befindlichen Erdbodens 1 äußerst wünschenswert. Dies erfolgt mit Hilfe der Sonden 3, die gemäß Fig. 2 nicht nur unter der Deponie D, sondern auch im Zuflußbereich Z und im Abflußbereich A des Grundwassers angeordnet sind, dessen Strömungsrichtung mit einem Pfeil angedeutet ist.

Fig. 3 zeigt die Ausgestaltung einer der Sonden 3 bzw. ihre Kombination mit einer speziellen Schaltungsanordnung B. Die Schaltungsanordnung B weist einen Analog-Digital-Wandler 14 auf, der über einen Verstärker samt Filter 15 mit dem Meßwertgeber der Sonde verbunden und von einem Mikroprozessor 16 gesteuert ist. Der Ausgang des Analog-Digital-Wandlers 14 ist an eine von einer Abfragestelle der zentralen Recheneinheit CPU gesteuerte Abfragestufe 17, 18 angeschlossen, die den Mikroprozessor 16 steuert. Weiters besitzt die Schaltungsanordnung B eine Datenspeichereinrichtung 19 in Form eines Pufferspeichers, der die vom Analog-Digital-Wandler 14 abgegebenen digitalen Daten über den Sender 17 der Abfragestufe 17, 18 zugeführt werden und die an den Empfänger 18 der Abfragestufe 17, 18 angeschlossen ist.

Vorteilhafterweise ist die Schaltungsanordnung B mit einer eingebauten elektrischen Energiequelle 20 versehen.

Die Sonden 3 sind derart untereinander verbunden, daß ihre Empfänger 18 an die Sendeleitung des Übertragungskanales 4 und ihre Sender 17 jeweils an den Sender 17 der benachbarten, der zentralen Recheneinheit CPU näherliegenden Sonde 3 angeschlossen sind, wobei der Sender 17 der der zentralen Recheneinheit CPU am nächsten liegenden Sonde 3 mit der Empfangsleitung der zentralen Recheneinheit CPU verbunden ist.

Die von den Meßwertgebern der Sonden 3 erfaßten Meßwerte, wie der Erdströme oder Erdpotentiale, werden also verstärkt und gefiltert und im Analog-Digital-Wandler 14 in digitale Daten umgesetzt, die in der Datenspeichereinrichtung 19 gespeichert und zu vorbestimmten Zeiten von der Abfragestelle der zentralen Recheneinheit CPU abgefragt werden. In der zentralen Recheneinheit CPU werden die Daten vorzugsweise auf Diskette gespeichert, weiterverarbeitet und schließlich angezeigt und/oder registriert. Zu diesem Zweck ist an die zentrale Recheneinheit CPU ein Peripheriegerät 23 angeschlossen, das ein Drucker und/oder ein Zeichengerät ist. Insbesondere werden den Daten vorbestimmte Größenbereiche zugeordnet, sodaß die Anzeige z.B. übersichtlicher gestaltet werden, farbig erfolgen, zur Angabe des Über- oder Unterschreitens vorbestimmter Grenzwerte und auch als dreidimensionale Darstellung erfolgen kann.

An die zentrale Recheneinheit CPU sind ferner wenigstens eine außerhalb des Deponiebereiches angeordnete Bezugssonde $S_{REF}$ und weiters ein Modem MODEM sowie ein drahtloses Übermittlungsgerät RADIO zur Fernüberwachung (Fig. 2) angeschlossen.

Weiters kann an die zentrale Recheneinheit CPU, allenfalls über den Modem, ein Steuergerät für eine (nicht gezeigte) Pumpe oder ein anderes Hilfsgerät angeschlossen sein, die bzw. das mit Hilfe von von der zentralen Recheneinheit CPU abgegebenen Steuersignalen gesteuert ist.

In erster Linie ist die Erfindung dafür vorgesehen, durch Schadstoffe hervorgerufene Anomalien der elektrischen Kenngröße im Erdboden aufzufinden, ihre genaue Stelle sowie allfällige "Fahnen", d.s. lange und schmale Kontaminationszonen und Leckagen von Deponien festzustellen, die etwa durch Risse in der Kunststoffbahn 5 entstanden sind.

Aber auch undicht gewordene unterirdische Kanäle lassen sich mit Hilfe der Erfindung sofort erfassen. Die Leckstellen zeigen sich auf dem Monitor oder auf einem Plotterausdruck als Flächen mit erhöhten Werten der elektrischen Kenngröße, wohingegen z.B. abzweigende oder kreuzende Kanäle bloß als eng begrenzte Punkte oder Linien erscheinen. Erfolgt die Darstellung zweidimensional, so werden die Leckstellen angenähert trapezförmig, die Kanäle jedoch zackenförmig angezeigt.

Weitere Anwendungsgebiete der Erfindung sind Staudämme, Tanklager, Raffinerien, unterirdische Wasser- und Erdölförderleitungen.

Die Erfindung bietet die Vorteile, daß das Gebiet unter einer Deponie dauernd überwacht werden kann, wobei äußere, störende Einflüsse praktisch ausgeschlossen sind. Bei der Überwachung des Gebietes kann aufgrund der Messungen sofort eine grobe Lokalisierung einer Schadstelle vorgenommen werden, wonach gegebenenfalls im der Deponie benachbarten Erdboden weitere Sonden in geringeren Abständen niedergebrascht werden, um eine feine Lokalisierung durchzuführen. Der Aufbau der Einrichtung ermöglicht die Verwendung leichterer und kürzerer Kabel, die genaue Zuordnung der Sonden zu ihrem Standort und ihren Meßwerten und die wiederholte Abfrage der Meßwerte sowie ihren Vergleich mit vorangegangenen, wobei auch die dauernde Anwesenheit von Bedienungspersonal entbehrlich ist. Anderseits ist ohne weiteres eine Fernüberwachung, sei es über Kabel, sei es drahtlos, möglich, wobei die Auslösung eines Alarmes und/oder die Einleitung von Gegenmaßnahmen automatisiert werden kann.

## Patentansprüche

1. Verfahren zur Überwachung eines Gebietes, bei welchem an mehreren Meßstellen des Gebietes das Potential gemessen und in digitale elektrische Signale umgesetzt wird und die Signale in vorbestimmten Zeitabständen, vorzugsweise periodisch von einer zentralen Recheneinheit abgefragt, in dieser verarbeitet und sodann angezeigt und/oder registriert werden, wobei die Meßstellen in vorbestimmten Abständen entlang wenigstens einer an das Gebiet angrenzenden, vorzugsweise geschlossenen Linie angeordnet werden, dadurch gekennzeichnet, daß wenigstens einige der Meßstellen unterhalb des Gebietes angeordnet werden, und daß die Potentialdifferenzen zwischen jeweils zwei benachbarten Meßstellen gemessen werden.

2. Verfahren nach Anspruch 1, dadurch gekennzeichnet, daß wenigstens einige der Meßstellen unterhalb des Grundwasserspiegels angeordnet werden.

3. Verfahren nach Anspruch 1 oder 2, dadurch gekennzeichnet, daß die elektrischen Signale an den Meßstellen gespeichert werden.

4.  Verfahren nach den Ansprüchen 1 bis 3, bei dem wenigstens eine Bezugsmeßstelle verwendet wird, dadurch gekennzeichnet, daß jede Bezugsmeßstelle bezüglich des Gebietes jenseits der Linie angeordnet wird.

5.  Verfahren nach Anspruch 4, dadurch gekennzeichnet, daß die Bezugsmeßstellen im Zuflußbereich und gegebenenfalls im Abflußbereich des Grundwassers angeordnet werden.

6.  Verfahren nach Anspruch 4 oder 5, dadurch gekennzeichnet, daß die Meßstellen und die Bezugsmeßstellen örtlich vertauscht werden, jeweils die beiden einander zugeordneten gemessenen Potentiale voneinander subtrahiert und diese Differenzen weiterverarbeitet werden.

7.  Verfahren nach den Ansprüchen 1 bis 6, dadurch gekennzeichnet, daß die Meßwerte gespeichert und zu den vorbestimmten Zeitabständen mit vorangegangenen Meßwerten verglichen werden.

8.  Verfahren nach den Ansprüchen 1 bis 7, dadurch gekennzeichnet, daß bei Überschreiten der Meß- und oder Vergleichsergebnisse über einen vorbestimmten Grenzwert ein Alarmsignal ausgelöst wird.

9.  Verfahren nach den Anspruch 8, dadurch gekennzeichnet, daß das Alarmsignal als Steuersignal für eine automatische Steuerung, z.B. diejenige einer Pumpe, verwendet wird.

10.  Verfahren nach den Ansprüchen 1 bis 9, dadurch gekennzeichnet, daß die Abfrage der elektrischen Signale an die zentrale Recheneinheit drahtlos erfolgt.

11.  Verfahren nach den Ansprüchen 1 bis 10, dadurch gekennzeichnet, daß den elektrischen Signalen abgestufte Größenbereiche zugeordnet werden und daß diese Größenbereiche gemeinsam mit den übrigen Signalen angezeigt und/oder registriert werden.

12.  Anlage zur Durchführung des Verfahrens nach den Ansprüchen 1 bis 11, mit elektrischen Sonden, die jeweils einen Meßwertgeber aufweisen und über einen Analog-Digital-Wandler sowie einen Übertragungskanal an eine Auswertestelle angeschlossen sind, wobei die Sonden in vorbestimmten Abständen entlang wenigstens einer an das Gebiet angrenzenden, vorzugsweise geschlossenen Linie angeordnet sind, jede Sonde mit einer in ihrer Nähe angeordneten, an den Meßwertgeber angeschlossenen Abfragestufe verbunden ist, und wobei die Auswertestelle eine zentrale Recheneinheit sowie eine mit den Abfragestufen über den Übertragungskanal verbundene zentrale Abfragestelle aufweist, dadurch gekennzeichnet, daß wenigstens einige der Sonden (3) unterhalb des Gebietes angeordnet sind und daß jede vorzugsweise über ein Filter an die Abfragestufe (17,18) angeschlossene Sonde (3) eine Datenspeichereinrichtung (19) aufweist, wobei der Analog-Digital-Wandler (14) und die Datenspeichereinrichtung (19) von einem Mikroprozessor (16) gesteuert sind.

13.  Anlage nach Anspruch 12, dadurch gekennzeichnet, daß wenigstens einige der Sonden (3) unterhalb des Grundwasserspiegels angeordnet sind.

14.  Anlage nach den Anspr 12 oder 13, dadurch gekennzeichnet, daß der Übertragungskanal als Funkstrecke ausgebildet ist.

15.  Anlage nach den Ansprüchen 12 bis 14, mit wenigstens einer Bezugssonde, dadurch gekennzeichnet, daß die Bezugssonde ($S_{REF}$) bezüglich des Gebietes jenseits der Linie angeordnet ist.

16.  Anlage nach Anspruch 15, dadurch gekennzeichnet, daß jede Bezugssonde im Zuflußbereich oder Abflußbereich des Grundwassers angeordnet ist.

17.  Anlage nach den Ansprüchen 12 bis 16, dadurch gekennzeichnet, daß die Sonden (3) mit einer eingebauten elektrischen Energiequelle (20) ausgestattet sind.

18.  Anlage nach den Ansprüchen 12 bis 17, dadurch gekennzeichnet, daß an die zentrale Recheneinheit (CPU) ein Steuergerät, z.B. für eine Pumpe angeschlossen ist.

6

# FIG. 1

RADIO

CPU

MODEM

4

③ ③ ③ ③

A

③ ③ ③ ③ ③ ③

D

③ Z ③

**FIG. 2**

**FIG. 3**

23

} 4

4

CPU

17

μP

16

RCV
18

19

$S_{REF}$

15

A/D

PWR

AMP/FILT

14

20

S

3